# EUROPEAN PATENT APPLICATION

(11) **EP 4 683 386 A1**
(43) Date of publication of application: **21.01.2026**
(21) Application number: 25182352.2
(22) Date of filing: 12.06.2025
(51) Int. Cl.: H04W 36/00, H04W 36/36

(54) **APPLICATION INFLUENCED HANDOVER**

(30) Priority: 18.07.2024 FI 20245904
(71) Applicant: Nokia Solutions and Networks Oy, 02610 Espoo (FI)
(72) Inventor: LE PALLEC, Michel, Massy (FR); BUI, Dinh Thai, Châtenay-Malabry (FR)
(74) Representative: Nokia EPO representatives

(57) **Abstract**

A user equipment, UE, comprising means for: obtaining one or more deployment solutions for a distributed application to be deployed, wherein the one or more deployment solutions are compliant with application requirements of the distributed application; sending, to one of a UE serving access node and a discovery function adapted for discovery of deployment solutions in an associated domain including network and compute resources, information on an application-influenced list of access nodes, wherein the application-influenced list of access nodes is limited to access nodes used in the one or more deployment solutions ; configuring the UE to connect to a target access node resulting from the handover procedure, wherein the target access node is selected in the application-influenced list of access nodes.

## Description

### TECHNICAL FIELD

Various example embodiments relate generally to methods and corresponding apparatuses for performing a handover procedure or a method and corresponding apparatus for configuring a handover procedure.

### BACKGROUND

The deployment of a distributed application over both network and compute resources is challenging. To this aim, the concept of Edge Application Slices (EAPS) has been developed which especially considers how to map application requirements with available network and compute resources.

Another aspect to be addressed is to find the solutions to be deployed based on application requirements or policies and deploy and configure the best deployment solution by especially configuring the infrastructure (e.g., including the mobile network).

Further, when a distributed application involves a User Equipment (UE) and an Application Server (AS) that are connected through an access network and the UE is connected to the access network via a given access node, the available network and compute resources may be limited (e.g., with regards to latency requirements of the distributed application) to the network and compute resources that are accessible through this access node. The deployed solution may therefore not be optimal.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method for use by a user equipment, UE, for performing a handover procedure is disclosed. The method comprises: obtaining one or more deployment solutions for a distributed application, wherein the one or more deployment solutions are compliant with application requirements of the distributed application; sending, to one of a UE serving access node and a discovery function adapted for discovery of deployment solutions in an associated domain including network and compute resources, information on an application-influenced list of access nodes, wherein the application-influenced list of access nodes is limited to access nodes involved in the one or more deployment solutions; completing the handover procedure, wherein the handover procedure results in the selection of a target access node in the application-influenced list of access nodes.

The information may be sent to the UE serving node and includes a measurement report limited to target access nodes in the application-influenced list of access nodes.

The information may be sent to the discovery function, wherein the discovery function is configured to provide the application-influenced list of access nodes to the UE serving access node for causing the UE serving access node to limit the handover procedure to the application-influenced list of access nodes.

The information may include partial deployment solutions providing a mapping of one or more application component functions to network or compute resources in the associated domain, wherein the discovery function is configured to extract the application-influenced list of access nodes from the partial deployment solutions.

The method may include deploying one or more application component functions for one of the one or more deployment solutions involving the target access node.

The handover procedure may be a conditional handover procedure, the method comprising receiving, by the UE from the serving access node, a handover command including at least radio conditions to be evaluated by the UE; selecting, by the UE in the application-influenced list of access nodes, the target access node satisfying at least the radio conditions, and which is the best with regards to the application requirements.

Obtaining the one or more deployment solutions may comprise: sending a discovery request message to the discovery function for discovery of partial deployment solutions for the target distributed application, the discovery request message comprising the application requirements of the target application and a list of application component functions to be deployed; receiving, in response to the discovery request message, at least one first partial deployment solution which provides a mapping of at least one application component function to network and/or compute resources in the associated domain; generating the one or more deployment solutions by aggregating the at least one first partial deployment solution with at least one second partial deployment solution providing a mapping of at least one application component function to network and/or compute resources in the UE.

The at least one first partial deployment solution may be generated based on metrics generated for network and/or compute resources in the associated domain.

The at least one second partial deployment solution may be generated based on metrics generated for UE network and/or compute resources adapted for the deployment of the distributed application.

According to another aspect, a user equipment, UE comprises means for: obtaining one or more deployment solutions for a distributed application to be deployed, wherein the one or more deployment solutions are compliant with application requirements of the distributed application; sending, to one of a UE serving access node and a discovery function adapted for discovery of deployment solutions in an associated domain including network and compute resources, information on an application-influenced list of access nodes, wherein the application-influenced list of access nodes is limited to access nodes involved in the one or more deployment solutions; completing the handover procedure, wherein the handover procedure results in the selection of a target access node in the application-influenced list of access nodes.

The means may be adapted for performing one or more or all steps of the method according to the first aspect. The means may include at least one processor and at least one memory storing instructions that, when executed by the at least one processor, cause the user equipment to perform one or more or all steps of a method according to the first aspect. The means may include circuitry (e.g., processing circuitry) to perform one or more or all steps of a method according to the first aspect and/or any method disclosed herein.

According to another aspect, a computer program comprises instructions that, when executed by an apparatus, cause the apparatus to perform: obtaining one or more deployment solutions for a distributed application to be deployed, wherein the one or more deployment solutions are compliant with application requirements of the distributed application; sending, to one of a UE serving access node and a discovery function adapted for discovery of deployment solutions in an associated domain including network and compute resources, information on an application-influenced list of access nodes, wherein the application-influenced list of access nodes is limited to access nodes involved in the one or more deployment solutions; completing the handover procedure, wherein the handover procedure results in the selection of a target access node in the application-influenced list of access nodes. The instructions may cause the apparatus to perform one or more or all steps of a method according to the first aspect and/or any method disclosed herein.

According to another aspect, a non-transitory computer readable medium comprises computer program instructions stored thereon for causing an apparatus to perform at least the following: obtaining one or more deployment solutions for a distributed application to be deployed, wherein the one or more deployment solutions are compliant with application requirements of the distributed application; sending, to one of a UE serving access node and a discovery function adapted for discovery of deployment solutions in an associated domain including network and compute resources, information on an application-influenced list of access nodes, wherein the application-influenced list of access nodes is limited to access nodes involved in the one or more deployment solutions; completing the handover procedure, wherein the handover procedure results in the selection of a target access node in the application-influenced list of access nodes. The computer program instructions may cause the apparatus to perform one or more or all steps of a method according to the first aspect or any method disclosed herein.

According to a second aspect, a method for use by an access node for performing a handover procedure is disclosed. the method comprising: receiving, from one of a user equipment, UE, served by the access node and a discovery function adapted for discovery of deployment solutions in an associated domain including network and compute resources, information on an application-influenced list of access nodes, wherein the application-influenced list of access nodes is limited to access nodes involved in one or more deployment solutions , wherein the one or more deployment solutions are for a distributed application to be deployed and are compliant with application requirements of the distributed application; completing the handover procedure based on the application-influenced list of access nodes, wherein the handover procedure results in the selection of a target access node in the application-influenced list of access nodes.

The information may be received from the UE and includes a measurement report limited to target access nodes in the application-influenced list of access nodes.

The method according to the second aspect may comprise: receiving, from a core network entity, a ranking rule for ranking the application-influenced list of access nodes according to measurements reports and/or application requirements; ranking the application-influenced list of access nodes according to the ranking rule; selecting the target access node in the application-influenced list of access nodes

The information may be received from the discovery function and includes the application-influenced list of access nodes.

The received application-influenced list of access nodes received from the discovery function may be ranked according to application requirements.

According to another aspect, an access node comprises means for: receiving, from one of a user equipment, UE, served by the access node and a discovery function adapted for discovery of deployment solutions in an associated domain including network and compute resources, information on an application-influenced list of access nodes, wherein the application-influenced list of access nodes is limited to access nodes involved in one or more deployment solutions, wherein the one or more deployment solutions are for a distributed application to be deployed and are compliant with application requirements of the distributed application; completing the handover procedure based on the application-influenced list of access nodes, wherein the handover procedure results in the selection of a target access node in the application-influenced list of access nodes.

The means may be adapted for performing one or more or all steps of the method according to the second aspect. The means may include at least one processor and at least one memory storing instructions that, when executed by the at least one processor, cause the access node to perform one or more or all steps of a method according to the second aspect. The means may include circuitry (e.g., processing circuitry) to perform one or more or all steps of a method according to the second aspect.

According to another aspect, a computer program comprises instructions that, when executed by an apparatus, cause the apparatus to perform: receiving, from one of a user equipment, UE, served by the access node and a discovery function adapted for discovery of deployment solutions in an associated domain including network and compute resources, information on an application-influenced list of access nodes, wherein the application-influenced list of access nodes is limited to access nodes involved in one or more deployment solutions , wherein the one or more deployment solutions are for a distributed application to be deployed and are compliant with application requirements of the distributed application; completing the handover procedure based on the application-influenced list of access nodes, wherein the handover procedure results in the selection of a target access node in the application-influenced list of access nodes. The instructions may cause the apparatus to perform one or more or all steps of a method according to the second aspect.

According to another aspect, a non-transitory computer readable medium comprises computer program instructions stored thereon for causing an apparatus to perform at least the following: receiving, from one of a user equipment, UE, served by the access node and a discovery function adapted for discovery of deployment solutions in an associated domain including network and compute resources, information on an application-influenced list of access nodes, wherein the application-influenced list of access nodes is limited to access nodes involved in one or more deployment solutions , wherein the one or more deployment solutions are for a distributed application to be deployed and are compliant with application requirements of the distributed application; completing the handover procedure based on the application-influenced list of access nodes, wherein the handover procedure results in the selection of a target access node in the application-influenced list of access nodes. The computer program instructions may cause the apparatus to perform one or more or all steps of a method according to the second aspect.

According to a third aspect, a method for configuring a handover procedure is disclosed. The method comprises: receiving, from a user equipment, UE, by a discovery function adapted for discovery of deployment solutions in an associated domain including network and compute resources, information on an application-influenced list of access nodes, wherein the application-influenced list of access nodes is limited to access nodes involved in one or more deployment solutions, wherein the one or more deployment solutions are for a distributed application to be deployed and are compliant with application requirements of the distributed application; sending, by the discovery function to the UE serving access node, a request message including the application-influenced list of access nodes.

The information may include partial deployment solutions providing a mapping of one or more application component functions to network or compute resources in the associated domain.

The method may comprise: extracting the application-influenced list of access nodes from the partial deployment solutions.

The application-influenced list of access nodes may be ranked according to application requirements before being sent to the UE serving access node.

According to another aspect, a network entity comprises means for: receiving, from a user equipment, UE, by a discovery function adapted for discovery of deployment solutions in an associated domain including network and compute resources, information on an application-influenced list of access nodes, wherein the application-influenced list of access nodes is limited to access nodes involved in one or more deployment solutions, wherein the one or more deployment solutions are for a distributed application to be deployed and are compliant with application requirements of the distributed application; sending, by the discovery function to the UE serving access node, a request message including the application-influenced list of access nodes.

The means may be adapted for performing one or more or all steps of the method according to the third aspect. The means may include at least one processor and at least one memory storing instructions that, when executed by the at least one processor, cause the network entity to perform one or more or all steps of a method according to the third aspect. The means may include circuitry (e.g., processing circuitry) to perform one or more or all steps of a method according to the third aspect.

According to another aspect, a computer program comprises instructions that, when executed by an apparatus, cause the apparatus to perform: receiving, from a user equipment, UE, by a discovery function adapted for discovery of deployment solutions in an associated domain including network and compute resources, information on an application-influenced list of access nodes, wherein the application-influenced list of access nodes is limited to access nodes involved in one or more deployment solutions, wherein the one or more deployment solutions are for a distributed application to be deployed and are compliant with application requirements of the distributed application; sending, by the discovery function to the UE serving access node, a request message including the application-influenced list of access nodes. The instructions may cause the apparatus to perform one or more or all steps of a method according to the third aspect.

According to another aspect, a non-transitory computer readable medium comprises computer program instructions stored thereon for causing an apparatus to perform at least the following: receiving, from a user equipment, UE, by a discovery function adapted for discovery of deployment solutions in an associated domain including network and compute resources, information on an application-influenced list of access nodes, wherein the application-influenced list of access nodes is limited to access nodes involved in one or more deployment solutions, wherein the one or more deployment solutions are for a distributed application to be deployed and are compliant with application requirements of the distributed application; sending, by the discovery function to the UE serving access node, a request message including the application-influenced list of access nodes. The computer program instructions may cause the apparatus to perform one or more or all steps of a method according to the third aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 is a schematic representation of a distributed application deployed according to an example.
FIG. 2 is a schematic illustration of a two-domain approach according to an example.
FIG. 3 is a schematic illustration of a discovery process for generating deployment solutions according to an example.
FIG. 4 is a schematic illustration of a discovery process for generating deployment solutions according to an example
FIG. 5 is a schematic diagram illustrating aspects of network and compute resource according to an example.
FIG. 6 is a flowchart of a method for generating deployment solutions based on a discovery process according to an example.
FIGS. 7-10 are flowcharts of handover procedures according to examples.
FIGS. 11-13 are flowcharts of a method for configuring a handover procedure according to examples.
FIG. 14 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

One or more example embodiments describe methods for performing or configuring a handover procedure.

Embodiments disclosed herein relate to handover mechanisms which are application influenced (or application aware) to the extent that various steps may include metrics collection, decision making for selecting a deployment solution for a distributed application and enforcement are influenced / adapted to take into account or best meet application requirements of the distributed application with regards to available network and compute resources.

The methods disclosed herein may be implemented for radio telecommunication networks, including a fifth generation (5G) network or 6G network. Prior or subsequent generations of radio telecommunication systems may be concerned by the methods disclosed herein.

An access node (or access point) may be an entity configured to perform functions for providing connectivity for end-user devices to access a telecommunication network and its services. An access node may be associated with one or more radio cells through which the access node can provide connectivity. An access node may include functions of a mobile base station. An access node may be configured to perform other functions, e.g., network control functions and/or network management functions (such as an OAM function, Data Analytics Function, etc). An access node (or access point) may be implemented as a stand-alone computing device or a distributed computing system. For example, the functionalities of the access node may be carried out by one or more computing devices, e.g., by one or more computing devices in an access network and/or by one or more computing devices in a core network and/or one or more computing devices in a data network.

An access node or base station may refer to a computing device configured to control the radio resources of a communication system it is coupled to. Any type of base station (eNB, gNB, gNB-DU, gNB-CU, etc) of any generation of radio communication networks may be considered. The base station may include or be coupled to transceivers. The base station may be connected to a core network, CN. Depending on the system, the counterpart on the CN side may be a serving gateway (S-GW, routing and forwarding user data packets), packet data network gateway (P-GW), for providing connectivity of user devices (UEs) to external packet data networks, or mobile management entity (MME), etc.

A user equipment, UE, (also referred to as user terminal or user device or terminal device or end device) may refer to any device used directly by an end-user to communicate with at least one other physically separated device. It may be a mobile station (MS), a mobile phone, a radio cell phone, a smartphone, a personal digital assistant (PDA), a handset, a device using a wireless modem (alarm or measurement device, etc.), a drone, a laptop and/or touch screen computer, a tablet, a phablet, a game console, a notebook, and a multimedia device, as examples. The UE may be implemented as a computing device that includes a transceiver for wired or wireless communication, operating with or without a subscriber identification module (SIM). The UE may include storage resources, computing resources, communication resources, sensors and/or actuators, etc.

The exemplary embodiments disclosed herein apply in a network environment comprising multiple domains. A domain may be an administrative and/or a technological concept for grouping resources under the responsibility of a control entity, that may be associated with one or more stakeholders, e.g. legal and/or physical persons, which share ownership of the resources.

Resources include network resources and compute resources.

Network resource may refer for example to (wired or wireless) communication links, communication components/functions (e.g., gNB, UPF, etc) and/or communication interfaces for communicating between two physically distinct entities through a network segment. A requirement related to a network resource may be expressed by various parameters, for example a bandwidth of a communication link, network latency, packet loss, reliability, power consumption, etc.

Compute resources may refer for example to any type of processor, processing resources or processing architectures. A requirement related to a compute resource may be expressed by various parameters, e.g., a processing capacity, processing type (CPU, GPU, NPU, DPU...), security features, a processing load, cache memory, etc. In a large sense, compute resources also include storage resources such as Random Access Memory (RAM), hard-disk memory, etc. Those latter resources store the data before and after they are processed or computed.

A challenge is to discover the network and compute resources in multiple domains of the network environment that best meet the requirements of a distributed application to be deployed over the multiple domains. For example, in processing offload scenarios such as virtual reality or metaverse applications, latency is a critical requirement and depends significantly on the transport and processing latency introduced respectively by the network and compute resources which are selected for deploying the virtual reality or metaverse applications.

Typically, a set of network and compute resources is used to support virtual networking functions in order to provide a communication service with a related service level agreement defined by communication parameters such as the communication latency.

To express application requirements for a distributed application to be deployed, a list or oriented graph of application components may be used, where the application components should be mapped onto underlying network and compute resources. The application requirements may relate to application components and/or the intermediate communication flows between the application components.

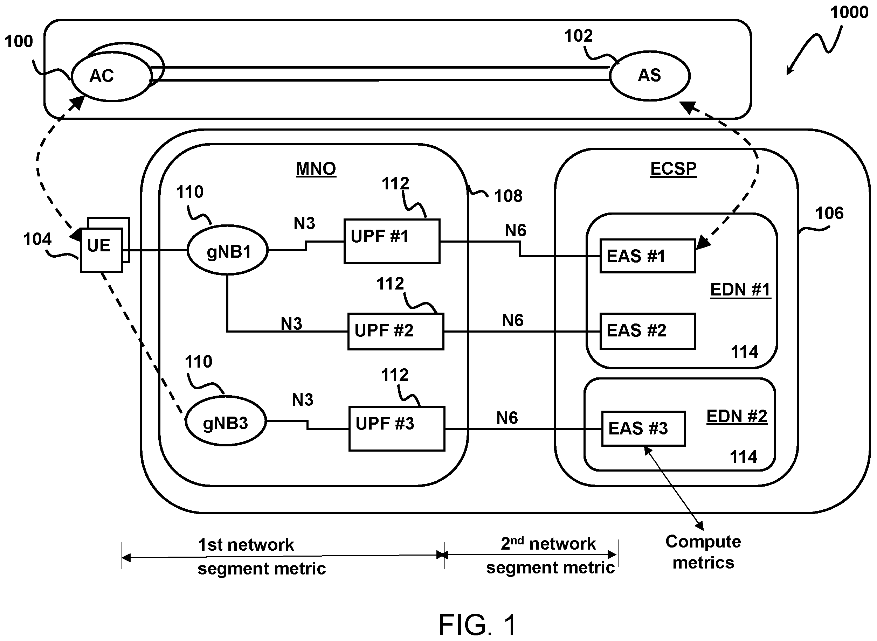

FIG. 1 is a schematic representation illustrating the selection of a deployment solution for a distributed application deployed according to an example, corresponding to a 3GPP SA2 simplified scenario (3GPP 5GA use case).

In this simplified example, the distributed application consists in only two application components: the Application Client (AC) 100 which is running on the UE 104 and the Application Server (AS) 102 which is to be placed onto a server, e.g., an Edge Application Server (EAS). The application components AC and EAS may be provided by an application service provider (ASP). The EAS may be deployed in a computing service infrastructure 106 of a computing service provider (e.g., an Edge Computing Service Provider, ECSP).

In general, a distributed application includes at least two application components. An application component is referred to as an Application Component Function (ACF).

The UE 104 may connect to a mobile network 108 provided by a mobile network operator (MNO) 108. The mobile network 108 of the MNO may comprise one or more Radio Access Networks (RANs), including access nodes (e.g., gNB1, gNB3) 110 and one or more UPFs 112 associated with the access nodes. The UE 104 may connect to one or more access nodes 110 of the mobile network 108. The one or more access nodes 110 interface with one or more UPFs 112 via a communication interface (e.g., a N3 interface).

The application service infrastructure 106 may comprise one or more data networks (e.g., edge data networks, EDN) 114 with (cloud) computing resources. The one or more EDNs 114 may comprise one or more EAS instances (EAS#1, EAS#2, EAS#3, etc.). The one or more UPFs 112 of the mobile network 108 may interface with the one or more EAS instances via a communication interface (e.g., N6 interface).

Network metrics may be determined for the network segments between the UE 104 and the one or more UPFs 112 via the one or more RANs 110. Network metrics determined for the network segments between the one or more EAS instances and the one or more UPFs 112. Compute metrics may be determined for the computing resources in the computing service infrastructure 106 of a computing service provider. The network and compute metrics may be used to select network and compute resources for deploying the distribution application.

In the example of FIG. 1, there are three available application servers EAS#1, EAS#2 and EAS#3 corresponding respectively to 3 deployment solutions:
- The server EAS#1 is accessible through network resources including the access node gNB1, the interface N3, the UPF#1 and the interface N6;
- The server EAS#2 is accessible through network resources including the access node gNB1, the interface N3, the UPF#2 and the interface N6;
- The server EAS#3 is accessible through network resources including the access node gNB3, the interface N3, the UPF#3 and the interface N6.

Finding an optimized deployment solution (referred to as the "Best EAS selection" use case) for the distributed application may be performed by optimizing an aggregated metric which is a function of 3 types of metrics:
- first network segment metrics which cover the network resources (e.g., communication links, interfaces, etc) of the network segment between the UE and the UPF;
- second network segment metrics which cover the network resources (e.g., communication links, interfaces, etc) of the network segment between the UPF and the EAS; and
- compute metrics which cover the compute resources of the AS, or more generally the computing service infrastructure 106.

However, if the network and compute resources of the UE that may be allocated to the AC and the deployment of the distributed application are ignored in the computation of the aggregated metric, the deployment solution selected only on the basis of the first and second network segment metrics and compute resources of the computing service infrastructure 106 may be not optimal, at least from UE resources point of view.

The impact of the access node and/or the access network selected for the UE may also be important.

For example, the gNB #1 may be more suitable than gNB #3 for meeting the application requirements, for example because the UPF#1 and/or EAS#1 connected to gNB #1 are less loaded than the UPF#3 and/or EAS#3. Unfortunately, with regards to a communication service-centric approach (e.g., by considering radio signal measurement provided by the UE to its serving gNB also referred to herein as source gNB), the gNB #3 may be selected as the best access node for providing the service, thereby imposing that only network and compute resources (i.e. UPF#3 and/or EAS#3) accessible through the selected access node and/or the access network may be used.

As another example, the UE may, during a handover procedure, select a target cell and access node which provides excellent radio signal, but which is part of a network path lacking backhaul bandwidth or which leads to an overloaded EAS.

In embodiments, handover procedures that are application requirements aware are used. Those handover procedures are referred to herein as application aware handover procedures. These handover procedures are designed to take into account not only communication requirements (e.g., by considering radio signal measurement, related to neighboring access nodes, provided by the UE to its serving gNB as in existing handover procedure) but also application requirements of the distributed application.

The application requirements of a distributed application may be any requirement related to network and compute resources. By taking into account the compute resource requirements (e.g., Edge Application Server load) and/or network resource requirements (e.g., a backhaul available bandwidth) during a handover procedure, the quality of service of the distributed application may be improved.

In embodiments, the handover procedures are adapted such that an influenced list (or application-influenced list, application-aware list) of access nodes, that is application requirements aware, is generated in which a target access node for serving the UE is selected by the UE or by the serving access node. This can be done so as to be backward compatible with the existing handover procedures as explained in detail herein. In this way, the influenced list of access nodes is termed herein the 'application-influenced' list of access nodes. In the present disclosure, the two expressions "application-influenced list" and "influenced list" are used interchangeably.

In embodiments, the selection of the optimal deployment solution is performed based on metrics related to network and compute resources of the UE.

To this end, a two-domain approach may be used by defining, for a given distributed application and a UE, a first network and compute resource domain, hereafter the UE domain, and a second network and compute resource domain, hereafter the Virtual Domain (VD), that may correspond to one or more network and compute domains. Each of the UE domain and Virtual Domain has its own network and compute resources and may be considered as a resource domain.

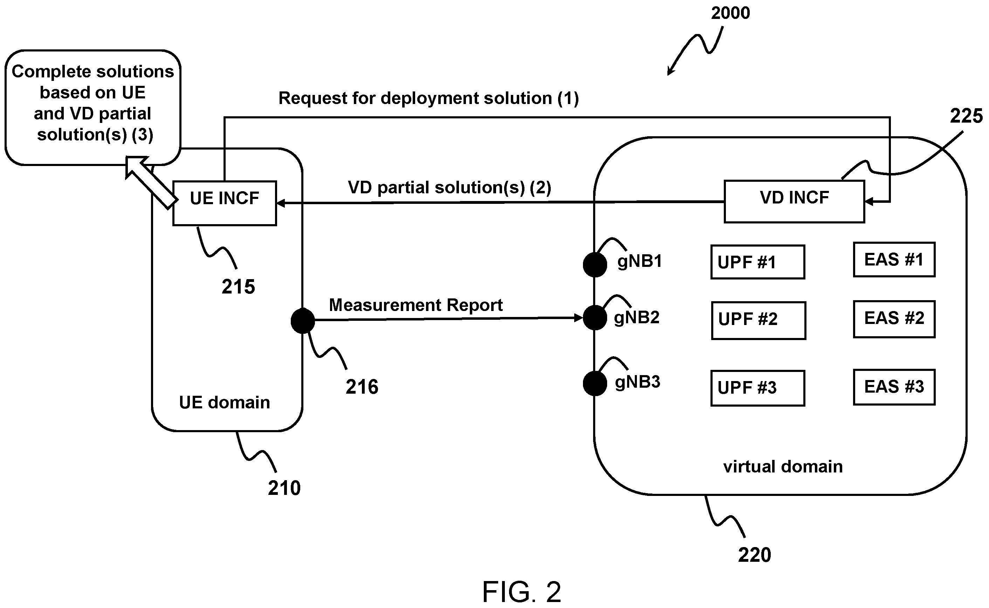

FIG. 2 is a schematic illustration of the two-domain approach according to an example.

The UE domain and the Virtual Domain are delineated by communication interfaces between the UE domain and the Virtual Domain and especially by the radio link between the UE and the access node serving the UE at the Virtual Domain side.

The UE domain includes the network and compute resources of the UE. The compute resources of the UE may include for example a processing unit of the UE, an available processing capability of a peripheral device like an Extended Reality (XR) Head-Mounted Device (HMD) which is controlled by the UE, the total available processing capability of a subnetwork where the/ one UE is playing the role of a gateway.

The network resources of the UE may include for example any radio interface of the UE such as the 3GPP air interfaces, Uu, a WiFi interface, a Sidelink interface, etc. The Virtual Domain includes all the resources, excluding the resources in the UE domain and the radio link serving as communication interface between the two domains. The Virtual Domain may for example include the application servers that may be used for the distributed application component functions, the access nodes of an access network, the network resources of the underlying network segments connecting the access nodes to the application servers, processing nodes that may host one or more application modules to support application requirements.

In each of the UE domain and the Virtual Domain, a respective discovery function is implemented that is configured to generate possible partial deployment solution(s) of the distributed application based on the network and compute resources of its respective domain. The discovery function is also referred to herein as the Integration of Network and Compute Function (INCF).

In embodiments, the INCF of the Virtual Domain (hereafter the VD INCF) generates partial deployment solutions of the distributed application based on the network and compute resources of the Virtual Domain and the INCF of the UE domain (hereafter the UE INCF) generates partial deployment solutions of the distributed application based on the network and compute resources of the UE domain and the solutions received from the UE domain. By partial deployment solution, it is meant that only a part of the resources needed by the distributed application is defined in the partial deployment solution, where the part corresponds to the considered domain and is complemented (the partial deployment solutions being chained) with respect to the considered domain.

The UE INCF manages and controls network and compute resources allocated to application component functions (ACFs) (of the distributed application) hosted by the UE. The UE INCF could be implemented in the UE or outside the UE (e.g., in the cloud RAN while delegating the UE management to the MNO).

Likewise, the VD INCF manages and controls network and compute resources allocated to application component functions (ACFs) (of the distributed application) hosted in the Virtual Domain. The VD INCF could be located within the mobile network of the MNO which directly connects the UE. In another scheme, the VD INCF could be located within an ECSP consuming network services provided by a mobile operator.

In embodiments, the UE INCF and VD INCF cooperate in client/server mode or service consumer/ provider mode , the UE INCF being the client for the VD INCF.

Based on the partial deployment solutions of the Virtual Domain and the partial deployment solutions of the UE domain, complete (i.e. aggregated or complemented) deployment solutions can be generated. The partial deployment solutions of the Virtual Domain are complemented by the UE INCF with the partial deployment solutions of the UE domain. A set of completed deployment solutions is therefore obtained by the UE INCF. A complete deployment solution can be defined by aggregating, with regards to application requirements, partial deployment solution of the Virtual Domain with partial deployment solution of the UE domain.

The partial deployment solutions of the Virtual Domain may be defined based on metrics available for network and compute resources of the Virtual Domain. Likewise, the partial deployment solutions of the UE domain may be defined based on metrics available for network and compute resources of the UE domain.

Embodiments disclosed herein relate to the distributed deployment of a target application in a multiple domains network environment and more particularly to the discovery of network resources and compute resources, in the multiple domains, that best meet the requirements or constraints to be met when deploying the target application.

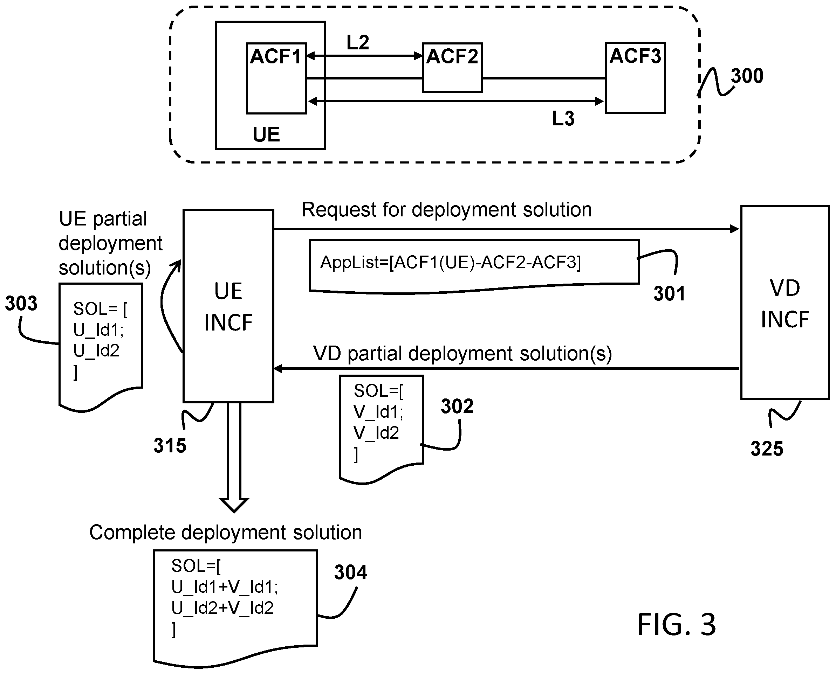

FIG. 3 is a schematic illustration of a discovery process for generating deployment solutions according to an example.

In this example, the distributed application 300 consists in three application components (or application component functions): application component ACF1 (e.g., Application Client) which is to be run on the UE (it is constrained to the UE domain) and two other components ACF2 (e.g., Rendering Function) and ACF3 (e.g., Edge Application Server). The application component ACF2 may for example be run in a network and compute domain of a MNO and the application component ACF3 may be run in a computing data network infrastructure of a ECSP. Topologically, these components ACF1, ACF2 and ACF3 are chained.

L2 and L3 represent maximum two-way network latencies respectively between ACF1 and ACF2 and between ACF1 and ACF3. L3 is the total end-to-end latency if one assumes unlimited compute resources supporting ACF2 and ACF3 (so that processing latencies can be ignored). No specific assumptions are made for L2 (except that L2<L3).

For initiating the discovery, the UE INCF may send a discovery request message 301 to the VD INCF for requesting deployment solutions. The discovery request message 301 may include a list of application components to be run with associated application requirements. The list of application components may be defined as a chained list of application components or a graph of application components. In the example of FIG. 3 the list of application components is defined as AppList=[ACF1(UE)-ACF2-ACF3].

In response to the discovery request message 301 from the UE INCF, the VD INCF provides partial deployment solutions 302 for the Virtual Domain. The partial deployment solutions 302 may be generated based on metrics related to network and/or compute resources available in the Virtual Domain. The VD INCF may for example select network and compute resources that allow to meet the application requirements for ACF2 and ACF3. In the example of FIG. 3 the partial deployment solutions 302 for the Virtual Domain are defined as SOL=[ V_Id1; V_Id2 ].
- V_Id1 is an identifier of a partial deployment solution for supporting a part of the distributed application (e.g., ACF2 and ACF3 and their binding) in the Virtual Domain;
- V_Id2 is an identifier of a partial deployment solution for supporting a part of the distributed application (e.g., ACF3) in the Virtual Domain;

In response to the receipt of partial deployment solutions for the Virtual Domain, the UE INCF may generate partial deployment solutions 303 for the UE domain. The partial deployment solutions 303 for the UE domain may be generated based on metrics related to network and/or compute resources available in the UE domain. The UE INCF may for example select network and compute resources available in the UE domain that allow to meet the application requirements for the ACF1. The UE INCF may for example select network and compute resources in the UE domain on the basis of the VD partial deployment solutions provided by the VD INCF and on the basis of application requirements. In the example of FIG. 3, the partial deployment solutions 303 for the UE domain are defined as SOL= [U_ld1; U_Id2 ].
- U_ld1 is an identifier of a partial deployment solution for supporting a part of the distributed application (e.g., ACF1) in the UE Domain;
- U_ld2 is an identifier of a partial deployment solution for supporting a part of the distributed application (e.g., ACF1, ACF2 and their binding ) in the UE Domain.

By aggregating the UE partial deployment solutions 303 and the VD partial deployment solutions 302, the UE INCF may generate complete deployment solutions 304. In the example of FIG. 3, the complete deployment solutions 304 are defined as SOL=[ U_Id1+V_Id1; U_Id2+V_Id2 ]

At the end, two complemented deployment solutions may be obtained: they could be represented as follow while emphasizing on gNB presence:
- U_ld1+V_ld1= [ ACF1---gNB1---ACF2---ACF3] with ACF1 being supported by the UE Domain, gNB1 being an access node for serving the UE and ACF2 and ACF3 (and their binding) being supported by the VD Domain;
- U_ld2+V_ld2= [ ACF1---ACF2-gNB2---ACF3] with ACF1 and ACF2 (and their binding) being supported by the UE Domain, gNB2 being an access node for serving the UE and ACF3 being supported by the VD Domain.

Both completed deployment solutions meet application requirements such as end-to-end latency (L3 metric and processing metrics). In this basic example, an influenced list of 2 target gNBs would be extracted.

The two-domain abstraction approach for computing partial deployment solutions to be aggregated may be further detailed with regards to more complex scenarios, with more ACFs and more network and compute domains forming the Virtual Domain. For example, a multi-domain use case can be abstracted as a two-domain case. An application composed of more than 3 application components could be represented as a set of 2 or 3 application components. Especially, a set of UEs (e.g., administrative collection) having network and compute resources may be considered as part of the Virtual Domain (or as part of a new virtualized UEs domain).

Also, in the two-domain approach, several discovery functions may be used in the Virtual Domain, each discovery function being associated with a network and compute domain which is part of the Virtual Domain. Such a discovery function is referred herein to as the domain-specific discovery function or domain-specific INCF.

For example, several network and compute domains may be defined in the Virtual Domain and there may be a domain-specific INCF per domain in the Virtual domain. Each domain-specific INCF is able to collect network and/or compute resources-related metrics for its associated domain and select appropriate network and compute resources on the basis of network and/or compute resources-related metrics generated for its associated domain. A domain is a resource domain and may correspond to either a "pure" network resource domain (with only communication services) or a network and compute resource domain.

To ease the discovery process, a central repository of domain-specific INCFs, associated with their resource area coverage and information to join the domain-specific INCFs may be used.

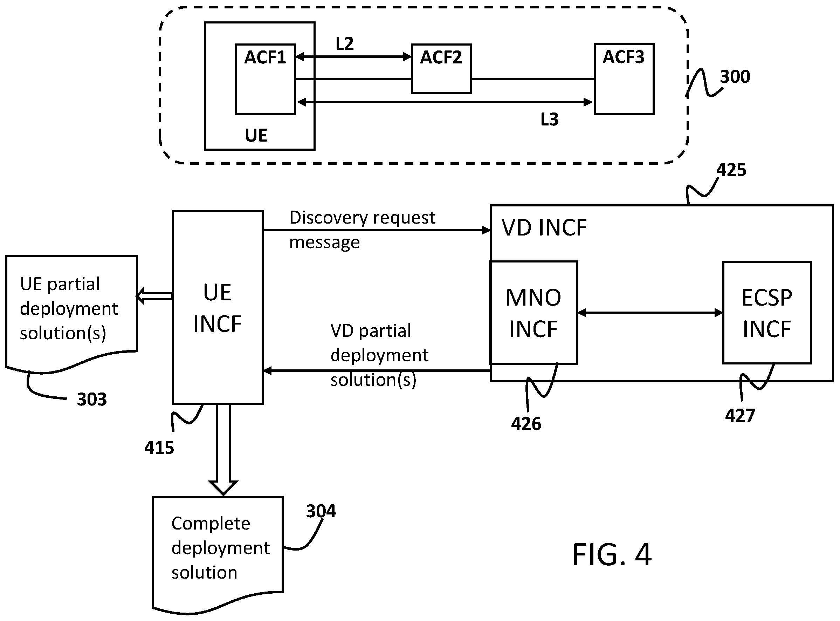

FIG. 4 is a schematic illustration of a discovery process for generating deployment solutions according to an example with several domain-specific discovery functions (INCFs) in the Virtual Domain.

In this example, as in FIG. 3, the distributed application 300 consists in three application components (or application component functions): application component ACF1 which is to be run on the UE and two other components ACF2 and ACF3. The application component ACF2 may for example be run in a network and compute domain of an MNO and the application component ACF3 may be run in a network and compute domain of a computing service provider (ECSP).

There may be a domain-specific discovery function (the MNO INCF 426 in FIG. 4) for the MNO domain and a domain-specific discovery function (the ECSP INCF 427 in FIG. 4) for the ECSP domain, where the domain-specific discovery functions cooperate to generate partial deployment solution at Virtual Domain level. Further, one of the domain-specific discovery functions may act as the VD INCF interacting with the UE INCF in client/server (or consumer/ provider) mode.

For example, the below options can be used:
1) The VD-INCF is MNO-INCF (as illustrated by FIG. 4);
2) The VD-INCF is the ECSP-INCF;
3) The VD-INCF is a broker or third party (service aggregator) based on MNO-INCF and ECSP-INCF;
4) VD-INCF is distributed on MNO-INCF and ECSP-INCF.

Partial deployment solutions of the Virtual Domain may be generated by aggregating local deployment solutions of several domains composing the Virtual Domain.

The aggregation may be performed in various manner, e.g., according to a chain or graph of INCFs.

For example, the aggregation may be performed in a centralized manner where either the UE INCF or one of the domain-specific INCFs (e.g., the VD INCF) collects and aggregates local deployment solutions from other domain-specific INCFs. In this case, the domain-specific INCFs may be organized in a hierarchical manner, where each domain-specific INCF is configured to provide its local partial deployment solutions to an upper domain-specific INCF in the hierarchy.

For example, the aggregation may be performed in a distributed manner, where each of the domain-specific INCFs generates its local deployment solutions and provides its local deployment solutions either directly to the UE INCF 415 or through one of the VD INCF425 which then provides the aggregated partial deployment solutions to the UE INCF 415.

For example, the aggregation may be performed by mixing the centralized manner and the distributed manner described above.

In the simplified example of FIG. 4, the ECSP INCF 427 provides, to the MNO INCF 426, its local deployment solutions SOL=[E_ld1; E_Id2 ] 405 supporting the application in the domain associated with the ECSP INCF 427.

The MNO INCF 426 in turn generates its local deployment solutions SOL=[M_ld1; M_Id2 ] supporting the application in the domain associated with the MNO INCF 426 and aggregates its local deployment solutions with those of the ECSP INCF 427.

At the end, the VD INCF 425 provides the aggregated partial deployment solutions meeting application requirements SOL=[E_id1+M_id1; E_ld2+M_ld2 =] 402 to the UE INCF 415 which performs as described for FIG. 3 to complement the VD partial deployment solutions with its partial deployment solutions.

In embodiments, the handover procedures are adapted such that an influenced list of access nodes, that is "application requirements aware" or "application aware", is generated for the UE to allow the UE to select a target access node for serving the UE. This list of access nodes is referred to herein as the application aware list or influenced list. The application aware list of access nodes uses only access nodes that are present in one or more of the complete deployment solutions that comply with application requirements.

The application influenced list of access nodes may be generated either by the UE (for example, by the UE INCF), and/or by the serving access node based on information from a domain-specific INCF in the Virtual Domain and/or by the VD INCF in the Virtual Domain.

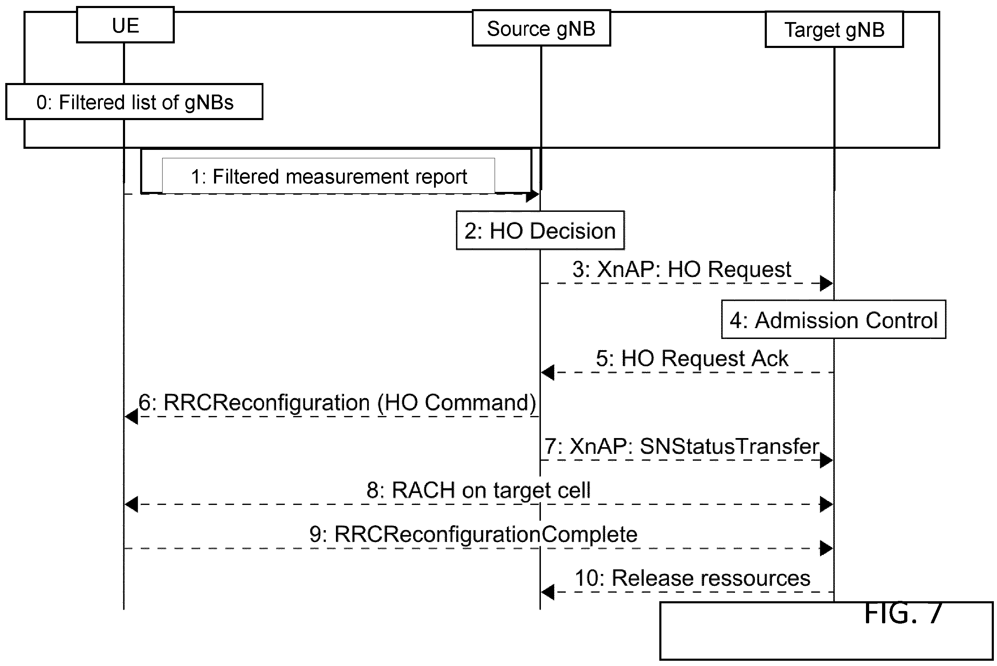

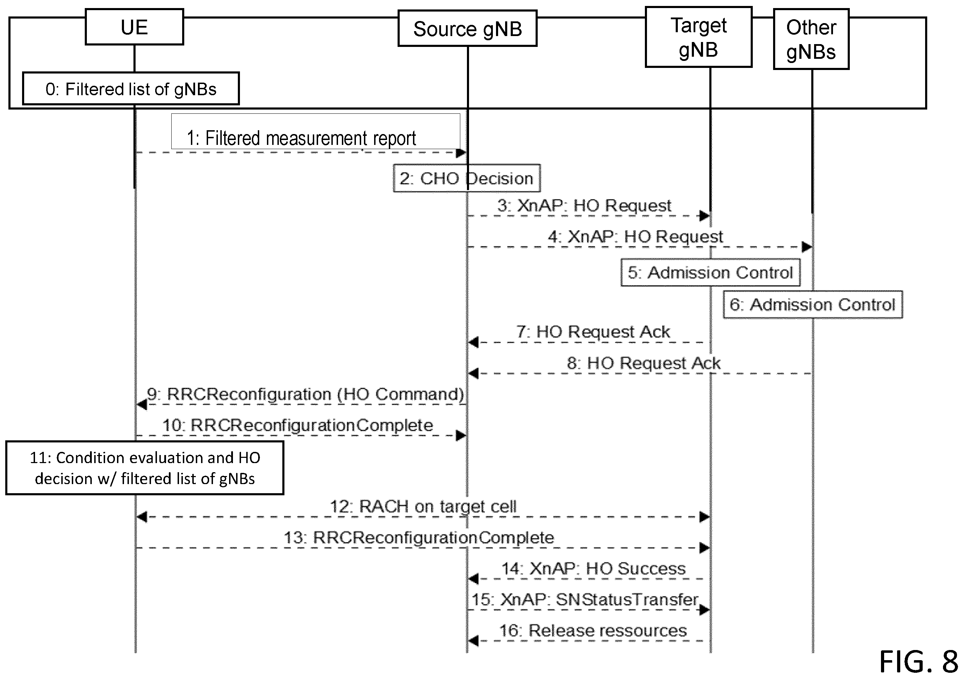

In a first category of embodiments, the application aware list of access nodes is generated by the UE (for example, by the UE INCF). This first category corresponds to embodiments of FIGS. 7 and 8.

According to existing handover procedure, a list of cell identifiers corresponding to respective target access nodes is generated for assessment by the UE based on measurements performed by the UE. This list of target access nodes is used as default list of target access nodes and is then filtered on the basis of the complete deployment solutions generated by the UE INCF. For example, the access nodes used in the complete deployment solutions that are application requirements aware are extracted to filter the default list of target access nodes so as to keep in the influenced list only the access nodes involved in the complete deployment solutions.

The influenced list may be ranked according to an aggregated metric used for evaluating the complete deployment solutions, where the aggregated metric may include application metrics or both network and compute resource-related metrics used to select the UE partial deployment solutions and VD network and compute resource-related metrics used to select the VD partial deployment solutions. The filtered and ordered list forms the application-aware list or application-influenced list.

In embodiments, a measurement report sent to the serving access node (e.g., gNB2) may be an application aware measurement report, i.e., a filtered measurement report generated using the application aware list of access nodes (in replacement of the default list of target access nodes based on measurements as in existing handover procedure).

In embodiments, to be able to generate deployment solutions adapted to a service area in which the UE is located, a Service Area information may be specified in the discovery request message 301 to identify the target Service Area. Such Service Area can be explicit or can be derived from other information such as UE location (GPS) of the UE subnet. The Service Area information especially allows the VD INCF to select, for its partial deployment solutions, only access nodes corresponding to the Service Area in which the UE is located.

The application aware measurement report is sent by the UE to the serving access node (in replacement of the default measurement report specified according to the 3GPP handover procedures). Such an enforcement is transparent to the specified 3GPP handover mechanisms (whether N2-based Hand Over, Xn-based basic HO or CHO). Then the handover procedures apply as usual. The handover procedures result in the selection (by the UE) and the enforcement of an application-aware target access node that becomes the new serving access node.

When such an enforcement is performed, the deployment of a selected deployment solution using an application-aware target access node can be completed.

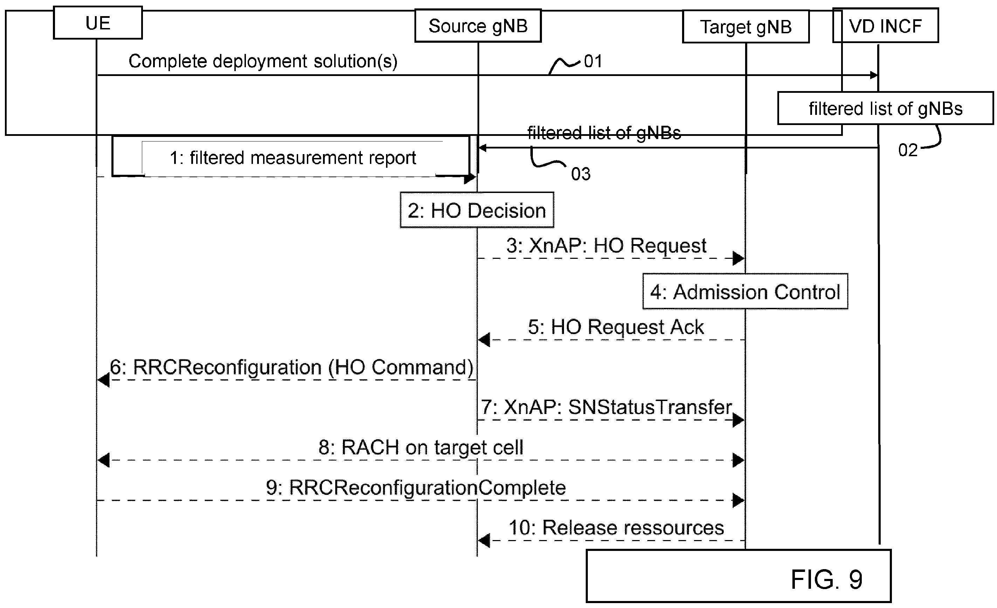

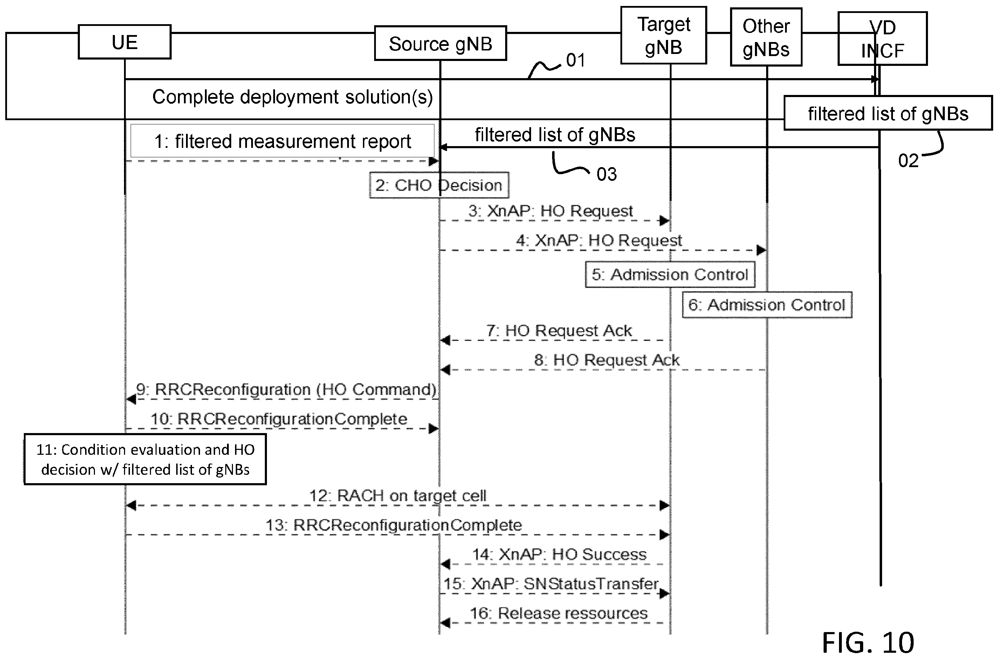

In a second category of embodiments, the application aware list of access nodes is generated by the serving access node based on information received from the VD INCF in the Virtual Domain. This second category corresponds to embodiments of FIGS. 9 and 10.

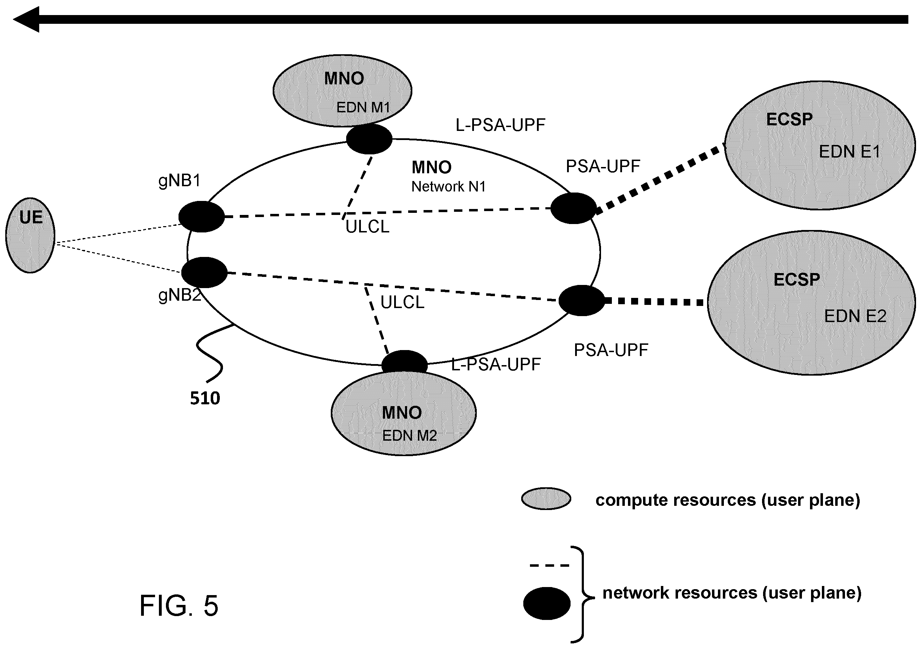

FIG. 5 is a schematic diagram illustrating aspects of metrics related to network and compute resources according to an example.

This figure is based on observation of variations of key system properties from an edge data network (e.g., EDN M1, EDN M2, EDN E1, EDN E2, either in an edge or central cloud computing infrastructure) through the mobile network 510 and then to the UE (as indicated by the arrow from right to left): to dynamicity, mutualization, granularity of network and compute resources.

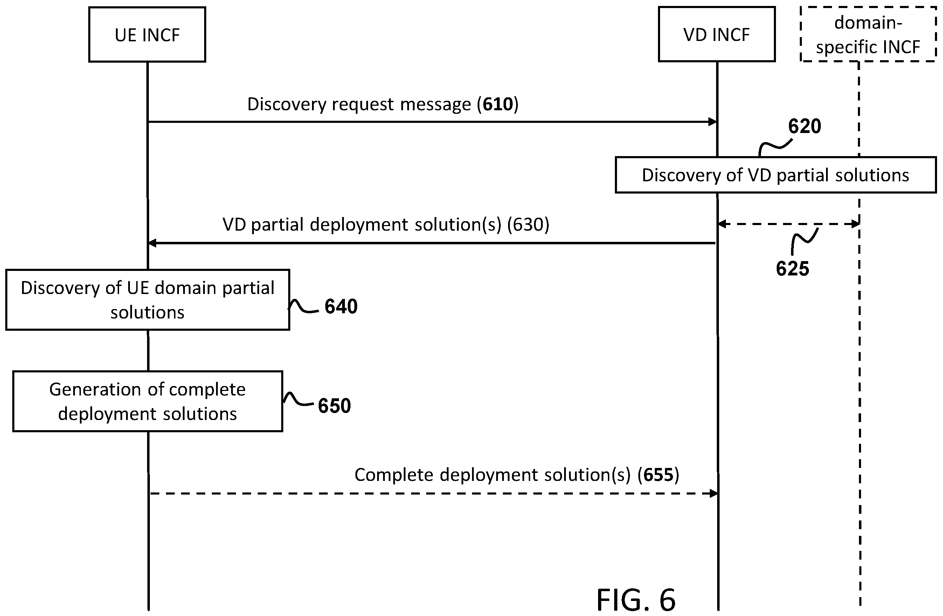

A UE-initiated backward recursive discovery scheme, by means of which complete deployment solutions are generated based on partial deployment solutions discovered in the Virtual Domain that are then completed by partial deployment solutions discovered in the UE domain (see for example the description of FIG. 6), is adapted in view of the behavior of network and compute metrics from the edge data network to the UE:
- From semi-static metrics at the edge data network, where metrics do not need to be refreshed in the near real-time basis, having huge and shared network and compute resources serving service requests from set of UEs,
- To highly dynamic metrics at the UE level, where metrics need to be refreshed in a near / real time basis, in which there are only constrained and limited network and compute resources associated with personalized services associated with the UE).

Practically, it means that aggregated metrics related to the edge data network, measured at time t, remain relevant over a relative long period of time (no need to refresh them each second). Whereas metrics related to the UE remain valid for a shorter period of time and need to be refreshed at higher frequency. Hence, partial deployment solutions computed in the Virtual Domain are expected to be more stable in time (without need for frequent metrics update) than the partial deployment solutions computed in the UE domain. The UE-initiated backward recursive discovery scheme leverages such a feature.

FIG. 6 is a flowchart of a method for generating deployment solutions based on a UE-initiated backward recursive discovery scheme according to an example.

The steps of the method may be implemented by a UE INCF, a VD INCF. according to any example described herein.

In embodiments, one or more domain-specific INCFs may be used. Each domain-specific INCF manages and controls network and compute resources of its domain. Domains are considered as network and compute resource domains which are contiguous but disjoints. As described for example by reference to FIG. 4, a domain is associated with a domain-specific INCF and the Virtual Domain consists of one or more domains. The Virtual Domain is managed and controlled by a VD INCF.

In step 610, the UE INCF sends a discovery request message to the VD INCF. The discovery request message 610 includes a list of application components to be run with associated application requirements, or an Application Identifier (ID) allowing for retrieving such an information.

The discovery request message 610 may include a Service Area information that identifies the Service Area for the UE. Such Service Area can be explicit or can be derived from other information such as UE location (e.g., GPS) of the UE subnet.

The discovery request message 610 may include a list of eligible access nodes. The list of eligible access nodes may be generated by the UE for example based on UE measurements related to access radio links and/or UE location.

In step 620, the VD INCF performs a discovery of first partial deployment solutions in its associated domain, the first partial deployment solutions being compliant with the application requirements related to the considered domain. The VD INCF performs the discovery based on network and/or compute metrics collected for resources in its associated domain.

In step 625 (optional), a domain-specific INCF may be involved in the discovery and may perform a discovery of second partial deployment solutions in its associated domain, the second partial deployment solutions being compliant with the application requirements related to the associated domain. The domain-specific INCF performs the discovery based on network and/or compute metrics collected for resources in its associated domain and sends the discovered second partial deployment solutions to the VD INCF.

The domain-specific INCF may receive the discovery request message and the remaining application components to be deployed together with the associated application requirements from the VD INCF. Alternatively, the domain-specific INCF may receive the discovery request message and/or the first partial deployment solutions from the VD INCF.

In step 630, the VD INCF sends to the UE INCF VD partial deployment solutions related to the Virtual Domain including the resource domain(s) associated with the domain-specific INCF(s).

Each VD partial deployment solutions involves at least one access node and associated communication interfaces and associated network links. The service area information may be used to strongly reduce the number of VD partial deployment solutions for the Virtual Domain to partial deployment solutions adapted to the UE current location.

In step 640, the UE performs a discovery of UE partial deployment solutions in the UE domain on the basis of metrics related to network and/or compute resources of the UE domain. The UE partial deployment solutions are compliant with the application requirements related to the UE domain.

The UE performs the discovery based on network and/or compute metrics collected for resources in the UE domain. The metrics collected by the UE for the UE domain remain local to the UE. However, the UE is involved in the collection of the metrics related to the communication interfaces (radio links) interfacing both UE and Virtual Domains.

In embodiments, the network and/or compute metrics may be updated by the UE each time the UE generates new UE partial deployment solutions in step 640. This allows to take into account in real time the state of network and compute resources in the UE, for example the current state of the radio link with a serving access node and/or the current capacity (processing load) of the UE in real-time. This is beneficial for applications having stringent requirements in terms of latency or in case of dynamically varying conditions.

There may be several options for triggering the collection of the metrics related to network and/or compute resources of the UE domain:
- the metrics may be periodically collected and proactively communicated by the UE (e.g. UE operating system) to the UE INCF such that the UE INCF proactively generates up-to-date completed deployment solutions at the reception of the metrics;
- the metrics may be "reactively" collected and communicated by the UE (e.g. UE operating system) to the UE INCF upon request (e.g., subsequently to a deterministic application awareness) such that the UE INCF generates in a reactive way up-to-date completed deployment solutions at the reception of the metrics.

Steps 610 to 640 may be repeated after step 630, in a recursive manner.

In step 650, the UE generates complete deployment solutions by aggregating the UE partial deployment solutions obtained in step 640 and the VD partial deployment solutions received in step 630. These complete deployment solutions are figured out to meet the application requirements. However, some degraded deployment solutions might be tolerated.

From these complete deployment solutions, an influenced list of target access nodes may be generated by the UE INCF (e.g. this list of target access nodes may be in the form of a list of Cell Identifiers (Cell ID) whose cells belong to the said target access nodes) by keeping only the target access nodes involved in these deployment solutions complying with the application requirements of the distributed application. The UE INCF may proactively generate this influenced list of target access nodes to be ready for being used in a handover procedure as described for example by reference to FIGS. 7-10. This allows to implement a handover procedure which is especially influenced both by the application requirements of the distributed application and the current state of the network and compute resources of the UE.

Optionally, The UE INCF may further filter out the list of target access nodes to limit its size to a given number of target access nodes if this meets the handover procedure requirements (e.g., in the CHO admission control procedure, a maximum of 8 target gNB is defined).

Optionally, the UE INCF or VD INCF may rank the complete deployment solutions with respect to application requirements and/or other defined business criteria (e.g. cost) and/or technical metrics (e.g. latency). The UE INCF or VD INCF may also rank the influenced list of target access nodes based on the ranking of the complete deployment solutions to be able to select the best target access node, from application requirement point of view, in the influenced list of target access nodes when the UE performs a CHO.

In step 655 (optional), the UE may send the complete deployment solutions to at least one of the first or second VD INCFs.

The discovery procedure of steps 610-650 may be triggered upon application request awareness by the UE. The awareness associated with the application request may be a proactive awareness by considering a probabilistic application request approach. A set of reduced popular applications (such as XR, VR which are identified to be very stringent today) can be pre-requested, or, simply, with regards to an Al based approach, application requests over time may be predicted. The awareness associated with the application request may be a reactive awareness involving a deterministic application awareness with the unambiguous detection of implicit (e.g. DNS query) or explicit application request.

FIG. 7 is a flowchart of a method for performing a handover (HO) from a source access node to a target access node according to embodiments.

The steps of the method may be implemented by a UE, a source access node (e.g., source gNB) and a target access node (e.g., target gNB) according to any example described herein.

This handover procedure is a basic HO from a source access node or source radio cell (e.g., source gNB) to a target access node (e.g., target gNB) or target radio cell. In such handover procedure, the source gNB performs a multi-criteria decision process and selects one unique target gNB on the basis of a measurement report received from the UE. An admission control procedure is executed for the selected target gNB.

Such a measurement report is associated with a monitoring task carried out by the UE. This measurement report especially contains radio signal measurement information (e.g., signal strength, RSRP) related to neighboring cells corresponding to a default list of access nodes to be assessed by the UE through the measurements. This default list of access nodes or default list of target cells is referred to as the default list of target access nodes in the handover procedure described herein.

The 3GPP standardized handover procedure is adapted (see especially steps 0 and 1 below) to be based on an influenced list of target access nodes involved in deployment solutions that comply with the application requirements of a distributed application. The discovery of these deployment solutions may be performed according to any embodiment described herein, for example by reference to FIGS. 3-4 and 6. This adapted handover procedure results in the selection and deployment and configuration of an application aware target gNB.

At an initialization time, it is assumed that a communication service is already set up: the UE is connected to a source gNB.

Step 0: the UE (e.g. the UE INCF) obtains deployment solutions that comply with the application requirements of a distributed application.

The deployment solution may be generated based on metrics generated for UE network and/or compute resources adapted for the deployment of the distributed application.

From these deployment solutions, an influenced list of target access nodes is generated by especially filtering the default list of target access nodes which are assessed by the UE by measurements. The filtering is done to keep only the target access nodes involved in deployment solutions complying with the application requirements of the distributed application.

In this document and in the associated figures, we will use indifferently the terms 'influenced' or 'filtered' to qualify the influenced/filtered list of target access nodes or the influenced/filtered measurement report.

The influenced list of target access nodes can be considered to be a filtered list of access nodes with respect to a default list of access nodes. The default list of access nodes includes all access nodes detected (visible) by the UE. The default list of access nodes may further include access nodes that are not yet detected by the UE, but that may later be detected by the UE (they are part of a service area in which the UE is located and/or are derived from the location of the UE based on MNO topology information and used in the partial deployment solutions of the Virtual Domain). In embodiments, the default list may be enriched by the VD INCF.

The subsequent steps 1-10 are performed by a function of the UE, referred to as the UE RRC, involved in any handover procedure.

Step 1: the UE provides to the source gNB at least one measurement report for target access nodes corresponding to neighboring cells.

The measurement report is a filtered measurement report that concerns only the neighboring cells corresponding to target access nodes in the influenced list of target access nodes obtained in step 0. This measurement report provides information on the influenced list of target access nodes to the source gNB.

The measurement report may be intercepted and filtered by the UE INCF. For example, upon application awareness, the UE INCF may intercept each non-filtered measurement report generated by the UE RRC, and filter the intercepted measurement report to limit the measurement report to target access nodes involved in deployment solutions complying with the application requirements of the distributed application. The UE INCF may then provide the filtered measurement report to the UE RRC or the UE INCF may then provide the filtered measurement report to gNB directly.

In embodiments, the deployment solutions that comply with the application requirements of the distributed application may be updated (as described for step 0) by the UE INCF based on freshly collected metrics related to network and compute resources of the UE, when or each time a new measurement is performed by the UE, such that the influenced list of access nodes is always dynamically updated as a function of the current state of network and compute resources of the UE, the state of the communication interface between the UE and Virtual Domains, and the application requirements.

The handover procedure is then performed based on the filtered measurement report. The below steps 2-10 may be implemented, for example according to 3GPP standard.

Step 2: based on filtered and updated measurement report, the source gNB decides HO on a selected target cell corresponding to a selected target gNB. The selected target cell may be the cell associated with the best radio signal reported in the measurement report.

Step 3: the source gNB send a HO Request to the selected target gNB.

Step 4: the selected target gNB ensures it has enough resources for serving the UE.

Step 5: the selected target gNB accepts the HO.

Step 7: the source gNB notifies the selected target gNB and starts sending DL traffics to the target gNB.

Step 8: the UE initiates RACH on the selected target cell (with the selected target gNB)

Step 9: the UE notifies the selected target gNB of the completion of the HO.

Step 10: the selected target gNB releases resources on the source gNB.

The handover procedure results in the selection and enforcement of an application requirements aware target access node.

FIG. 8 is a flowchart of a method for performing a handover from a source access node to a target access node according to embodiments.

The steps of the method may be implemented by a UE, a source access node (e.g., source gNB) and a target access node (e.g., target gNB) according to any example described herein.

This handover procedure is a Conditional Hand Over (CHO) mechanisms which aim at improving robustness of the handover process. The Conditional Hand Over (CHO) procedure is from a source access node (e.g., source gNB) to a target access node (e.g., target gNB).

In a conditional handover procedure, the UE reports to the source gNB, though a measurements report, the measurements (signal strength) of neighboring cells. A pre-allocation of network resources is performed for eligible target gNBs which share their configuration parameters in the CHO (how to connect). HO conditions are defined by the source gNB. The HO conditions are sent to the UE which selects the best target gNB based on its measurements and the evaluation of the conditions.

The definition of the CHO conditions is a complex task especially while considering the whole RAN system (e.g. load-balancing between cells). Instead of just relying on signal strength, the Conditional Handover (CHO) mechanism considers multiple parameters or conditions to trigger a handover. These HO conditions can be based on the following network-related information, for example: Quality of Service (QoS) requirements, Mobility patterns, Network load and congestion, Application-specific requirements (e.g., low latency for real-time applications), User preferences or profiles. These HO conditions can be based on location or timing as well. Further, some constraints may be defined for these conditions: only 2 conditions can be defined per target gNB and a maximum of 8 targets gNBs can be considered in the CHO mechanism.

In a conditional handover procedure, according to the measurement report, the source gNB performs a multi-criteria decision process and selects multiple target gNBs. An admission control procedure is then executed for the multiple selected target gNBs. A list of conditioned (and admitted) target gNBs is sent to the UE which selects a unique target gNB according to its local knowledge (e.g. real time measurements) and meeting source gNB conditions.

The measurement report is associated with a monitoring task carried out by the UE. This measurement report especially contains measurements (e.g., signal strength, RSRP) related to radio cells corresponding to a default list of access nodes to be assessed by the UE by measurements. This default list of access nodes or target cells is used as default list of target access nodes in the handover procedure described herein.

The 3GPP standardized handover procedure is adapted (see steps 0 and 1 and 11 below) to take into account an influenced list of target access nodes involved in deployment solutions that comply with the application requirements of a distributed application. The discovery of these deployment solutions may be performed according to any embodiment described herein, for example by reference to FIGS. 3-4 and 6. This adapted handover procedure results in the selection and enforcement of an application aware target gNB.

At an initialization time, it is assumed that a communication service is already set up: the UE is attached to a source gNB and a related PDU session is configured.

Step 0: the UE (e.g. the UE INCF) obtains complete deployment solutions that comply with the application requirements of a distributed application.

The complete deployment solutions may be generated by the UE INCF based on metrics generated for UE network and/or compute resources adapted for the deployment of the distributed application.

The complete deployment solutions may be obtained by performing a backward recursive discovery scheme as disclosed herein, for example by reference to FIG. 6. The UE INCF may for example initiate the backward recursive discovery scheme with the VD INCF in order to establish complete deployment solutions based on the UE location (e.g. Cell ID) and the neighboring topology (e.g. neighboring gNBs). The latter information could be provided by the VD INCF which can have the full knowledge of the MNO topology. Alternatively, the UE INCF could trigger the UE RRC to perform a measurement which provides the UE INCF with the information of neighboring Cell IDs.

From these complete deployment solutions, an influenced list of target access nodes by filtering a default list of target access nodes to be assessed by the UE by measurements. The filtering is done to keep only the target access nodes that are involved in deployment solutions that complies with the application requirements of the distributed application.

The subsequent steps 1-16 are performed by a function of the UE, referred to as the UE RCC function, involved in any handover procedure, for example according to 3GPP standard.

Step 1: the UE (e.g. the UE RCC function involved in any handover procedure) provides to the source gNB at least one measurement report for target access nodes corresponding to neighboring cells.

The measurement report is a filtered measurement report that concerns only the neighboring cells corresponding to target access nodes in the influenced list of target access nodes obtained in step 0.

Once the UE INCF obtains the list of complete deployment solutions, the UE INCF could derive and provide the UE RRC with the influenced list of target gNBs (e.g., as a policy). The UE RRC may filter information in the measurement report to limit the measurement report to target access nodes involved in deployment solutions complying with the application requirements of the distributed application. Alternatively, the UE INCF may ask the UE RRC to submit the measurement report content, so that the UE INCF can filter the measurement report content before the UE RRC can send out the filtered measurement report to the source gNB.

In embodiments, the deployment solutions that comply with the application requirements of the distributed application may be updated (as described for step 0) by the UE INCF based on freshly collected metrics related to network and compute resources of the UE, when or each time a new measurement report is generated by the UE RRC, such that the measurement report is always dynamically updated as a function of the current state of network and compute resources of the UE, the state of the communication interfaces (i.e. radio link) between the UE and Virtual Domains, and the application requirements.

The handover procedure is then performed based on the filtered measurement report as usual. The below steps 2-16 may be implemented.

Step 2: based on measurements, the source gNB decides CHO and selects candidate target gNBs.

Steps 3-4: the source gNB sends a HO Request to selected target gNBs

Steps 5-6: target gNBs ensure they have enough resources to serve the UE

Step 7-8: the target gNBs accept the CHO

Step 9: the source gNB notifies the UE to execute CHO with the HO command including CHO conditions. The CHO conditions include radio conditions and could also include other conditions measurable by the UE, such as time interval, etc.

Step 10: the UE acknowledges the CHO and associated CHO conditions.

Step 11: the UE evaluates the CHO conditions for candidate cells. This step is adapted to take into account the deployment solutions: the UE is configured to select a target cell / target access node for which the CHO conditions are met, and which is involved in one of the deployment solutions that comply with the application requirements of the distributed application obtained in step 0. The UE may further select the target access node which is the best with regards to the application requirements.

Steps 12-16: the UE completes the CHO on the target gNB as defined in the standardized handover procedure.

The handover procedure results in the selection and enforcement of an application requirements aware target access node.

As a clear benefit of the influenced measurement report approach (as described for example by reference to FIGS. 7 and 8) based on deployment solutions meeting application requirements during handover procedure is that this approach allows to implement an application aware handover without affecting the different handover procedures (N2-based HO, Xn-based HO or CHO) and especially the complex HO decision making performed at the source gNB level.

FIG. 9 is a flowchart of a method for performing a handover from a source access node to a target access node according to embodiments.

The steps of the method may be implemented by a UE, a source access node (e.g., source gNB) and a target access node (e.g., target gNB) according to any example described herein.

The method of FIG. 9 is a variant of the method of FIG. 7 in which the VD INCF provides the source gNB with the information on the influenced list of access node.

In step 01, the UE sends information on an influenced list of access nodes a discovery function (e.g., VD INCF) adapted for discovery of deployment solutions in an associated domain including network and compute resources.

The information sent to the discovery function may include complete deployment solutions providing a mapping of one or more application component functions of the distributed application to network or compute resources in the UE and Virtual Domains.

In step 02, the discovery function (e.g. VD INCF) extracts the influenced list of access nodes from the complete deployment solutions received from the UE.

The influenced list of access nodes is limited to access nodes involved in the one or more complete deployment solutions. The influenced list of access nodes may be limited with respect to a default list of target access nodes. The default list may be generated by the UE serving access node in case the UE serving access node does not receive an influenced measurement report (pertaining to an influenced list of access nodes) from the UE.

In step 03, the discovery function provides the influenced list of access nodes to the UE serving access node for causing the UE serving access node to limit the handover procedure to the influenced list of access nodes.

Step 1: the UE provides to the source gNB at least one measurement report for target access nodes corresponding to neighboring cells.

Due to the limitation of the handover procedure to the influenced list of access nodes by the UE serving access node, the fact that the measurement report received from the UE may be filtered or not does not modify the result of the HO decision by the UE serving access node.

Steps 2-10 are performed as described by reference to FIG. 7 and will not be described again here for the sake of brevity.

FIG. 10 is a flowchart of a method for performing a handover from a source access node to a target access node according to embodiments.

The steps of the method may be implemented by a UE, a source access node (e.g., source gNB) and a target access node (e.g., target gNB) according to any example described herein.

The method of FIG. 10 is a variant of the method of FIG. 8 in which the VD INCF provides the source gNB with the information on the influenced list of access node.

Step 01-03 are performed as described by reference to FIG. 9 and will not be described again here for the sake of brevity.

Steps 2-11 are performed as described by reference to FIG. 8 and will not be described again here for the sake of brevity.

The principles of limiting the handover procedure to target access nodes involved in deployment solution compliant with application requirements to cause the selection and enforcement of an application requirements aware target access node described herein for example by reference to FIGS. 7-10 are applicable to any handover procedure, for example to an inter-gNB N2-based handover, in which messages between the two gNBs are delivered via the N2 interface (i.e. interface between the gNB and the AMF). N2-based handover generates more signaling and is used only when no Xn interface exists between the two gNBs or when Xn-based handover fails. The information on the influenced list of target access nodes may be provided to a UE serving access node by the UE (as in step 1 of FIG. 7 and 8) or by a discovery function (as in steps 01, 02, 03 of FIG. 9 and 10).

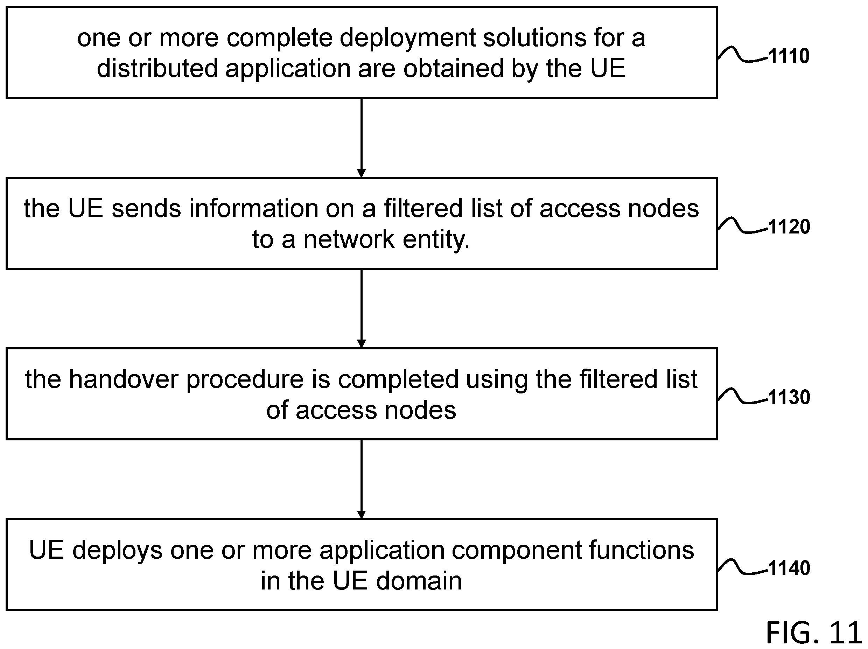

FIG. 11 is a flowchart of a method for or configuring a handover procedure from a source access node to a target access node according to embodiments. The steps of the method may be implemented by a UE according to any example described herein.

In step 1110, one or more complete deployment solutions for a distributed application are obtained by the UE, where the one or more complete deployment solutions are compliant with application requirements of the distributed application. The complete deployment solutions may be generated as described herein, for example by reference to FIGS. 3 and/or 4 and or 6.

For example, obtaining the one or more complete deployment solutions may include a discovery process involving a discovery function (e.g., VD INCF) adapted for discovery of deployment solutions in an associated domain, including network and compute resources but excluding the UE. The discovery process may include:
- sending a discovery request message to the discovery function for discovery of partial deployment solutions for the distributed application, the discovery request message comprising the application requirements of the application and a list of application component functions to be deployed;
- receiving, in response to the discovery request message, at least one first partial deployment solution which provides a mapping of at least one application component function to network and/or compute resources in the associated domain (i.e.., the Virtual Domain); and
- generating the one or more complete deployment solutions by aggregating the at least one first partial deployment solution with at least one second partial deployment solution providing a mapping of at least one application component function to network and/or compute resources in the UE.

The first partial deployment solution(s) may be generated based on metrics generated for network and/or compute resources in the associated domain.

The second partial deployment solution(s) may be generated based on metrics generated for UE network and/or compute resources.

In step 1120, the UE sends information on a filtered list of access nodes to a network entity. The network entity may be either the UE serving access node or a network entity including the discovery function (e.g., VD INCF) adapted for discovery of deployment solutions in an associated domain including network and compute resources.

The information on an influenced list of access nodes is sent to the network entity for causing the UE serving access node to limit the handover procedure to the influenced list of access nodes.

The influenced list of access nodes is limited to access nodes involved in the one or more deployment solutions. The influenced list of access nodes may be limited with respect to a default list of target access nodes, where the default list may be generated by the UE serving access node.

The information may be sent to the UE serving node and may include or be a measurement report limited to target access nodes in the influenced list of access nodes.

The information may be sent to the discovery function and the discovery function may be configured to provide the influenced list of access nodes to the UE serving access node for causing the UE serving access node to limit the handover procedure to the influenced list of access nodes. The information sent to the discovery function may include partial deployment solutions providing a mapping of one or more application component functions of the distributed application to network and/or compute resources in the associated domain. The discovery function may be configured to extract the influenced list of access nodes from the partial deployment solutions.

The handover procedure is then completed (step 1130) by the UE and the serving access node.

When the handover procedure is a conditional handover procedure, the UE may receive, from the serving access node, a handover command including at least radio conditions to be evaluated by the UE and the UE select, in the influenced list of access nodes, a target access node satisfying at least the radio conditions and which is the best with regards to the application requirements.

During the handover procedure, the UE connects to a target access node resulting from the handover procedure, wherein the target access node is selected in the influenced list of access nodes. Due to the influenced list of access nodes, the handover procedure results in the selection and enforcement of an application requirements aware target access node.

Once the handover is completed, the UE may deploy (step 1140) one or more application component functions in the UE domain for one of the one or more deployment solutions involving the target access node.

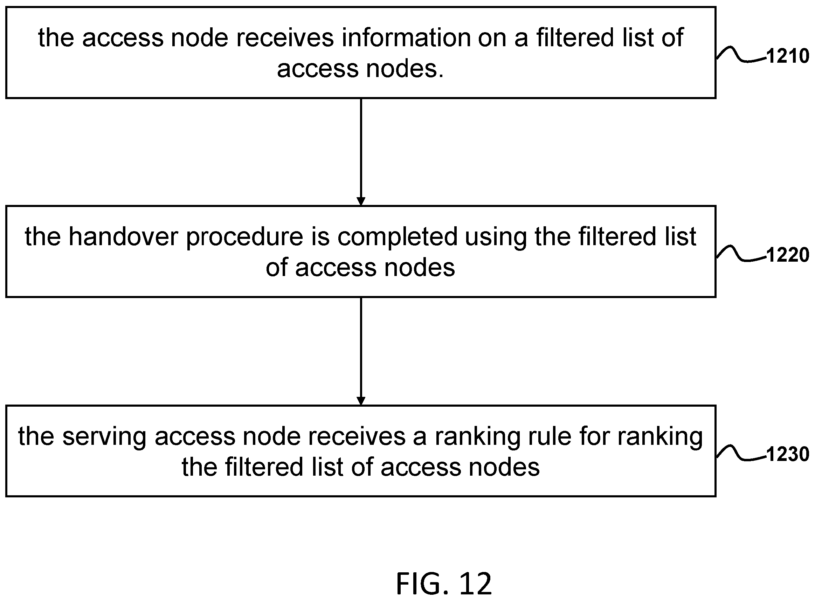

FIG. 12 is a flowchart of a method for or configuring a handover procedure from a source access node to a target access node according to embodiments. The steps of the method may be implemented by an access node (e.g., source gNB) according to any example described herein.

In step 1210, the access node receives information on an influenced list of access nodes. The information may be received either from a UE served by the access node or from a discovery function adapted for discovery of deployment solutions in an associated domain including network and compute resources.

The information may be received from the UE and may include or be a measurement report limited to target access nodes in the influenced list of access nodes.

The information may be received from the discovery function and may include the influenced list of access nodes. This influenced list of access nodes is to be used in replacement of a default list of target access nodes. The influenced list of access nodes received from the discovery function may be ranked according to application requirements.

The influenced list of access nodes is limited to access nodes involved in one or more deployment solutions of a distributed application where the deployment solutions are compliant with application requirements of the distributed application.

The influenced list of access nodes may be generated from the one or more deployment solutions by the discovery function by the discovery function (e.g., VD INCF). The influenced list of access nodes may be limited with respect to the default list of target access nodes, where the default list may be generated by the UE serving access node.

In step 1220, the handover procedure is completed using the influenced list of access nodes, wherein the handover procedure results in the selection of a target access node in the influenced list of access nodes. The target access node may be selected either by the serving access node (basic handover) or by the UE (conditional handover). Due to the influenced list of access nodes, the handover procedure results in the selection and enforcement of an application requirements aware target access node.

In step 1230 (optional), the access node may receive, e.g., from a core network entity, a ranking rule for ranking the influenced list of access nodes according to measurements reports and/or application requirements. The access node may then rank the influenced list of access nodes according to the ranking rule.

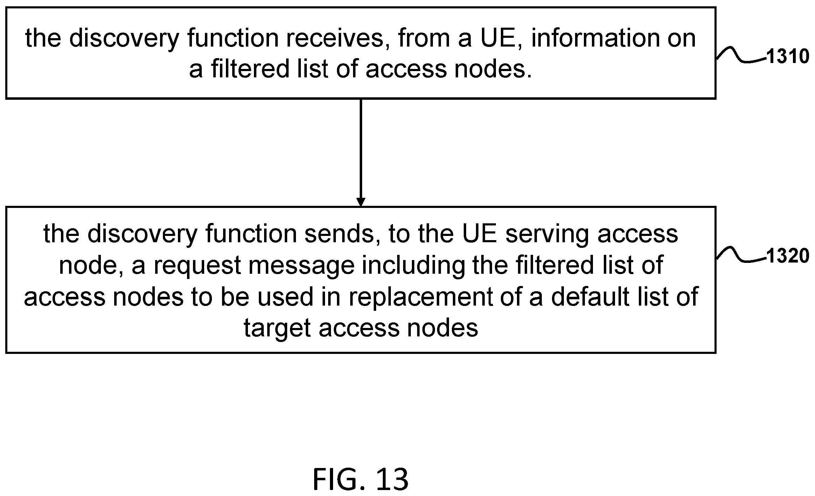

FIG. 13 is a flowchart of a method for configuring a handover procedure from a source access node to a target access node according to embodiments. The steps of the method may be implemented by a discovery function (e.g. VD INCF) according to any example described herein.

The discovery function is adapted for discovery of deployment solutions in an associated domain including network and compute resources.

In step 1310, the discovery function receives, from a UE, information on an influenced list of access nodes. The influenced list of access nodes is limited to access nodes involved in one or more deployment solutions, where the one or more deployment solutions are for a distributed application and are compliant with application requirements of the distributed application.

The information may include partial deployment solutions providing a mapping of one or more application component functions to network or compute resources in the associated domain. The discovery function may extract the influenced list of access nodes from the partial deployment solutions. The influenced list of access nodes may be ranked according to application requirements before being sent to the UE serving access node

In step 1320, the discovery function sends, to the UE serving access node, a request message including the influenced list of access nodes. The influenced list of access nodes is to be used in replacement of a default list of target access nodes.

In the embodiments disclosed herein, the application requirements aware handover procedures are backward compatible with the existing 3GPP procedures. For example, the used measurement (e.g. radio metrics) remain local and are not propagated towards the core network.

A metric collection is performed by the UE for network and compute resources of the UE to generate up-to-date deployment solutions taking into account the current state of the network and compute resources of the UE and the current states of the communication interfaces between UE domain and Virtual Domain. The deployment solutions are thus dynamically updated according to the time dependencies and temporal variations of required UE-level metrics generated locally by the UE.

The existing handover procedures are thus adapted based on an influenced list of access node / radio cells according to application requirements and UE-level metrics generated locally by the UE.

The discovery function may be interfaced with both the application layer (Application Service Provider) and different control entities having a view of the aforementioned metrics generated for the domain associated with the discovery function. Accordingly, the discovery function may act as a centralized decision-maker which can derive the best solution in its associated domain.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described (e.g., based on a flowchart) in a sequential manner, some of the steps may be performed in parallel, concurrently or simultaneously. Also some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

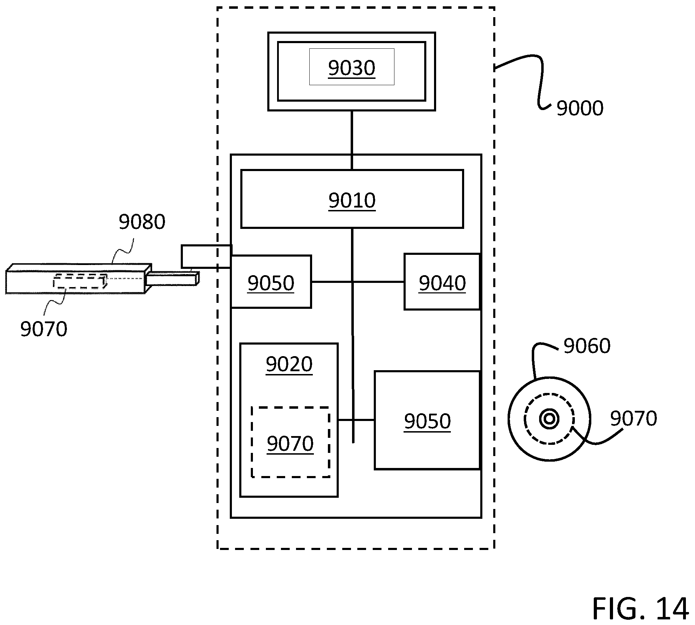

FIG. 14 illustrates an example embodiment of an apparatus 9000, as an example of computing device. The apparatus 9000 may be configured to perform one or more functions of a UE, an access node or a network entity including a discovery function described herein. The apparatus 9000 may be configured to perform one or more or all steps of any method or procedure (e.g., handover procedure) described herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc) connected to the processor and configured to communicate via wired / non wired communication link(s). The apparatus 9000 may include user interface devices 9030 (e.g., keyboard, mouse, display screen, etc) connected with the processor. The apparatus 9000 may further include one or more media drives 9050 for reading a computer-readable storage medium (e.g., digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to perform the considered function(s). The means may include circuitry (e.g., processing circuitry) configured to perform the considered function(s).

The term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

As a further example, the term circuitry also covers an implementation of merely a hardware circuit or processor (or multiple processors) or portion of a hardware circuit or processor and its (or their) accompanying software and/or firmware.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

### LIST OF MAIN ABBREVIATIONS

- 3GPP: 3rd Generation Partnership Project
- 5GC: 5G Core
- ACF: Application Component Functions
- AI: Artificial Intelligence
- AMF: Access & Mobility Management
- CHO: Conditional Hand Over
- ECSP: Edge Computing Service Provider
- EAS: Edge Application Function
- EDN: Edge Data Network
- gNB: gNodeB (NR base station)
- HO: Hand Over
- INCF: Integration of Network and Compute Function
- LTE: Long Term Evolution
- NR: New Radio
- NWDAF: Network Data Analytics Function
- OAM: Operation, Administration, Maintenance
- PCF: Policy Control Function
- RAN: Radio Access Network
- RRC: Radio Resource Control
- RSRP: Reference Signal Receive Power
- UE: User Equipment
- UPF: User Plane Function

## Claims

1. A method for use by a user equipment, UE, for performing a handover procedure, the method comprising
- obtaining one or more deployment solutions for a distributed application, wherein the one or more deployment solutions are compliant with application requirements of the distributed application;
- sending, to one of a UE serving base station and a discovery function adapted for discovery of deployment solutions in an associated domain including network and compute resources, information on an application-influenced list of base stations for causing the UE serving base station to limit the handover procedure to the influenced list of base stations, wherein the application-influenced list of base stations is limited to base stations involved in the one or more deployment solutions;
- completing the handover procedure, wherein the handover procedure results in the selection of a target base station in the application-influenced list of base stations.

2. The method of claim 1,
wherein the information is sent to the UE serving node and includes a measurement report limited to target base stations in the application-influenced list of base stations.

3. The method of claim 1,
wherein the information is sent to the discovery function, wherein the discovery function is configured to provide the application-influenced list of base stations to the UE serving base station for causing the UE serving base station to limit the handover procedure to the application-influenced list of base stations.

4. The method of claim 3,
wherein the information includes partial deployment solutions providing a mapping of one or more application component functions to network or compute resources in the associated domain, wherein the discovery function is configured to extract the application-influenced list of base stations from the partial deployment solutions.

5. The method of any of the preceding claims, comprising
- deploying one or more application component functions for one of the one or more deployment solutions involving the target base station.

6. The method of any of the preceding claims, wherein the handover procedure is a conditional handover procedure, the method comprising
receiving, by the UE from the serving base station, a handover command including at least radio conditions to be evaluated by the UE;
selecting, by the UE in the application-influenced list of base stations, the target base station satisfying at least the radio conditions, and which is the best with regards to the application requirements.

7. The method of any of the preceding claims, wherein obtaining the one or more deployment solutions comprises
- sending a discovery request message to the discovery function for discovery of partial deployment solutions for the target distributed application, the discovery request message comprising the application requirements of the target application and a list of application component functions to be deployed;
- receiving, in response to the discovery request message, at least one first partial deployment solution which provides a mapping of at least one application component function to network and/or compute resources in the associated domain;
- generating the one or more deployment solutions by aggregating the at least one first partial deployment solution with at least one second partial deployment solution providing a mapping of at least one application component function to network and/or compute resources in the UE.

8. The method of claim 7, wherein the at least one first partial deployment solution is generated based on metrics generated for network and/or compute resources in the associated domain.

9. The method of claim 7 or 8, wherein the at least one second partial deployment solution is generated based on metrics generated for UE network and/or compute resources adapted for the deployment of the distributed application.

10. A method for use by an base station for performing a handover procedure, the method comprising
- receiving, from one of a user equipment, UE, served by the base station and a discovery function adapted for discovery of deployment solutions in an associated domain including network and compute resources, information on an application-influenced list of base stations, wherein the application-influenced list of base stations is limited to base stations involved in one or more deployment solutions for causing the UE serving base station to limit the handover procedure to the influenced list of base stations, wherein the one or more deployment solutions are for a distributed application to be deployed and are compliant with application requirements of the distributed application;
- completing the handover procedure based on the application-influenced list of base stations, wherein the handover procedure results in the selection of a target base station in the application-influenced list of base stations.

11. The method of claim 10,
wherein the information is received from the UE and includes a measurement report limited to target base stations in the application-influenced list of base stations.

12. A method for configuring a handover procedure, the method comprising
- receiving, from a user equipment, UE, by a discovery function adapted for discovery of deployment solutions in an associated domain including network and compute resources, information on an application-influenced list of base stations, wherein the application-influenced list of base stations is limited to base stations involved in one or more deployment solutions, wherein the one or more deployment solutions are for a distributed application to be deployed and are compliant with application requirements of the distributed application;
- sending, by the discovery function to the UE serving base station, a request message including the application-influenced list of base stations for causing the UE serving base station to limit the handover procedure to the influenced list of base stations.

13. A user equipment, UE, comprising means for:
- obtaining one or more deployment solutions for a distributed application, wherein the one or more deployment solutions are compliant with application requirements of the distributed application;
- sending, to one of a UE serving base station and a discovery function adapted for discovery of deployment solutions in an associated domain including network and compute resources, information on an application-influenced list of base stations for causing the UE serving base station to limit the handover procedure to the influenced list of base stations, wherein the application-influenced list of base stations is limited to base stations involved in the one or more deployment solutions;
- completing the handover procedure, wherein the handover procedure results in the selection of a target base station in the application-influenced list of base stations.

14. A base station comprising means for:
- receiving, from one of a user equipment, UE, served by the base station and a discovery function adapted for discovery of deployment solutions in an associated domain including network and compute resources, information on an application-influenced list of base stations, wherein the application-influenced list of base stations is limited to base stations involved in one or more deployment solutions for causing the UE serving base station to limit the handover procedure to the influenced list of base stations, wherein the one or more deployment solutions are for a distributed application to be deployed and are compliant with application requirements of the distributed application;
- completing the handover procedure based on the application-influenced list of base stations, wherein the handover procedure results in the selection of a target base station in the application-influenced list of base stations.

15. A network entity comprising means for
- receiving, from a user equipment, UE, by a discovery function adapted for discovery of deployment solutions in an associated domain including network and compute resources, information on an application-influenced list of base stations, wherein the application-influenced list of base stations is limited to base stations involved in one or more deployment solutions, wherein the one or more deployment solutions are for a distributed application to be deployed and are compliant with application requirements of the distributed application;
- sending, by the discovery function to the UE serving base station, a request message including the application-influenced list of base stations for causing the UE serving base station to limit the handover procedure to the influenced list of base stations.
